# EUROPEAN PATENT APPLICATION

(11) **EP 4 454 869 A1**
(43) Date of publication of application: **30.10.2024**
(21) Application number: 23170526.0
(22) Date of filing: 28.04.2023
(51) Int. Cl.: B29C 70/44, F01D 5/28, F03D 1/06, B32B 5/10, B29C 70/38, B29C 70/52, B32B 7/12, B29L 31/08

(54) **METHOD FOR MANUFACTURING A CARBON BEAM ADAPTED TO BE A PART OF A WIND TURBINE BLADE, CARBON BEAM FOR A WIND TURBINE BLADE, WIND TURBINE BLADE AND WIND TURBINE**

(71) Applicant: Siemens Gamesa Renewable Energy A/S, 7330 Brande (DK)
(72) Inventor: Lucas, Thomas George, 9000 Aalborg (DK); Nielsen, Mogens, 9220 Aalborg (DK)
(74) Representative: SGRE-Association

(57) **Abstract**

Method for manufacturing a carbon beam (9) adapted to be a part of a wind turbine blade (2) to increase or to cause the mechanical strength of the wind turbine blade (2), wherein the final carbon beam (9) comprises at least one core component (10) being made of or comprising at least one carbon plank (17) and/or a core arrangement (15) of core mats comprising carbon fibers, wherein at least a part of the core component (10) is arranged between skin components (11, 12) being made of or comprising a skin stack (13, 14) of skin mats (16) each, wherein the at least one core component (10) and the skin components (11, 12) are provided and then joined together to build the final carbon beam (9), wherein a prefabricated core component (10) is used, and wherein either also prefabricated skin components (11, 12) are used or wherein the skin components (11, 12) are produced by arranging the skin stack (13, 14) in a predetermined shape and fixing the skin mats (16) with an adhesive.

## Description

The present invention relates to a method for manufacturing a carbon beam adapted to be a part of a wind turbine blade to increase or to cause the mechanical strength of the wind turbine blade.

Typically, carbon beams for wind turbine blades, which are often called as spar caps, are manufactured by arranging the respective components, i.e., fiber mats, of the carbon beam in a beam mold and fixing these components together in a single step. This, however requires a relatively large time for positioning the respective components in the beam mold. Furthermore, there is the need that all respective components are arranged in the beam mold on their required or final positions at the same time which is cumbersome.

It is an object of the present invention to realize an enhanced concept regarding the manufacturing process of a carbon beam, particularly with respect to a simplified handling of the respective components and to reduce the required manufacturing time.

This object is solved by a method as initially described, wherein the final carbon beam comprises at least one core component being made of or comprising at least one carbon plank and/or a core arrangement of core mats comprising carbon fibers, wherein at least a part of the core component is arranged between skin components being made of or comprising a skin stack of skin mats each, wherein the at least one core component and the skin components are provided and then joined together to build the final carbon beam, wherein a prefabricated core component is used, and wherein either also prefabricated skin components are used or wherein the skin components are produced by arranging the skin stack in a predetermined shape and fixing the skin mats with an adhesive.

The final carbon beam can have a laminated structure, wherein the core component which realizes the biggest part of the mechanical stability of the carbon beam is typically sandwiched between the skin components. This sandwich-structure can be present along the complete longitudinal extension of the carbon beam or only at its lateral edges, i.e., at the root- and/or the tip section, of the carbon beam. In the remainder of the carbon beam, it can consist only of the core component. The carbon beam can also be named as a spar cap.

Each of the skin components can be realized by a stack comprising several skin mats. The skin mats of the skin components and/or the core mats of the core component are preferably fabrics comprising fibers which are arranged in a textile, particularly a woven, structure. The mats, particularly the skin mats, may be fiber mats with fibers particularly of glass and/or carbon. The mats can be biaxial mats, particularly made of carbon fibers and/or glass fibers. Hence, the carbon beam can consist not only of carbon, but also of further materials like glass fibers.

The core component is realized by the core arrangement which can be also a core stack comprising several core mats and/or the at least one carbon plank. Particularly, carbon wedges are provided at the lateral end of the core component. At least a part of the fibers of the core mats of the core arrangement consist of carbon. However, also a hybrid material can be used for the core mats of the core arrangement, wherein carbon fibers and glass fibers can be provided.

The carbon plank and/or the carbon wedges can be pultruded carbon components. Pultruded components comprise reinforcement materials, particularly fibers or woven or braided strands, which are embedded in a resin matrix. Regarding the pultrusion process for manufacturing the carbon plank, the reinforcement materials are impregnated with resin, possibly followed by a separate preforming step. The impregnation can be done by pulling the reinforcement materials through a resin bath. Subsequently, the resin is hardened, e.g., by pulling the respective component through a heating station where the resin undergoes polymerization. Outer cover layers can realize an outer skin of the carbon beam.

According to the present invention, the components, e.g., the core mats and/or the at least one carbon plank of the core component and the skin mats of the skin components, are not arranged and fixed in a single processing step, but the core component and the skin components are separately provided and then joined together or fixed to manufacture the final carbon beam. Hence, the core component as well as the skin components can be prefabricated elements such that for manufacturing the final carbon beam not all mats and/or carbon components have to be positioned in its final or desired positions separately, but only the core component and the skin components have to be positioned, respectively. Hence, the manufacturing process of the final carbon beam is significantly simplified.

The present invention realizes a so called "pick and place" approach to material layup where typically hundreds of kilograms of material can be lifted and positioned giving a deposition rate of typically hundreds of kilograms per minute.

In a possible embodiment of the present invention, in a foregoing step, the skin components are produced by arranging the skin mats and, hence, the skin stack in a predetermined shape and the skin mats are then joined together or fixed with an adhesive. The adhesive can additionally cause a stiffening of the skin stack such that it is easier to handle for the subsequent steps for manufacturing the carbon beam.

Concretely, for producing at least one of the skin components, the skin stack comprising a curable binding agent being the adhesive is arranged on a mold surface of a core mold such that the shape of the skin stack adapts to the shape of the mold surface, wherein the binding agent is activated to conserve the shape of the skin stack. Assuming that the binding agent is activatable by applying heat, the skin stack which is stuck together with the binding agent can be reheated and re-formed, particularly several times, to ensure that the formed geometry is free from defects. This is a similar approach as it is used for manufacturing a fizzy drink can. The core mold is or comprises a rigid structure such that the shape of the skin stack adapts to the shape of the mold surface. Preferably, the mold surface comprises a concave shape, i.e., the cross-sectional shape of the mold surface is curved downwards. Alternatively, the shape of the mold surface can be bent upwards and be, hence, convex. The core mold can consist of a foamed plastic or of a wood or of a laminated structure.

Preferably, the skin stack is arranged between a lower vacuum foil and an upper vacuum foil, wherein a vacuum is created between the mold surface and the lower vacuum foil and between the lower vacuum foil and the upper vacuum foil. The airtight vacuum foils realize a vacuum bag having the skin stack inside. Creating the vacuum between the mold surface and the lower vacuum foil, i.e., under the vacuum bag, causes the lower surface of the skin stack to adapt to the shape of the mold surface. Creating the vacuum between the lower vacuum foil and the upper vacuum foil, i.e., inside the vacuum bag, causes the effect that the skin stack is compressed towards the mold surface such that the respective shape of the skin stack also adapts to the shape of the mold surface. The term "vacuum foil" is to be interpreted broadly, i.e., such that it can be realized by each impermeable surface.

Together with the skin mats, an air transportation layer constituting a "breathable" sheet can be packed together with the skin mats on the mold surface. The air transportation layer can consist of an open, porous material to allow air to pass through, i.e., to ensure that a vacuum can be created between the mold surface and the respective vacuum foil in a later manufacturing step. The air transportation layer can reduce the time which is required to establish the respective vacuum. The air transportation layer is typically removed before the skin stack is indexed with resin.

It is also possible that the skin stack is arranged between the mold surface and an upper vacuum foil, wherein a vacuum is created between the mold surface and the upper vacuum foil. In this embodiment, the lower vacuum foil is omitted. Creating the vacuum between the mold surface and the upper vacuum foil causes the skin stack to adapt to the shape of the mold surface. Assuming that the binding agent is activatable by applying heat, the skin stack can be removed from the mold surface not before the heat has been applied.

In a preferred embodiment of the method according to the present invention, for manufacturing a first skin component, a first, particularly outer, skin stack comprising the curable binding agent is arranged on the mold surface such that the shape of the first skin stack adapts to the shape of the mold surface, wherein the binding agent is activated to conserve the shape of the first skin stack, wherein, for manufacturing a second, particularly inner, skin component, a second skin stack comprising a curable binding agent is arranged on the first skin stack such that the shape of the second skin stack adapts to the shape of the first skin stack, wherein the binding agent is activated to conserve the shape of the second skin stack.

Preferably, the first skin stack is arranged between a first lower vacuum foil and a first upper vacuum foil, wherein a vacuum is created between the mold surface and the first lower vacuum foil and between the first lower vacuum foil and the first upper vacuum foil, wherein the second skin stack is arranged between a second lower vacuum foil and a second upper vacuum foil, wherein a vacuum is created between the first upper vacuum foil and the second lower vacuum foil and between the second lower vacuum foil and the second upper vacuum foil.

In this embodiment, two skin components which particularly have the core component sandwiched in between in the final blade are manufactured. The first skin component is produced as described above. Regarding the second skin component, the respective steps are also executed, wherein an upper surface of the first vacuum bag having the first skin stack inside acts for the second skin stack in the same way as the mold surface for the first skin stack. Hence, the lower surface of a second vacuum bag having the second skin stack inside as well as the second skin stack adapts to the shape of the first vacuum bag or the first skin stack, respectively, and, hence, to the shape of the mold surface. This causes the positive effect that the shapes of the final skin components perfectly match each other.

Preferably, at least one shaping element is arranged between the first skin stack and the second skin stack such that a part of the surface of the first skin stack and a part of the surface of the second skin stack adapts to the shape of the at least one shaping element, wherein the shape of the at least one shaping element corresponds to the shape of the at least one core component which is arranged in contact with the skin components in the manufactured carbon beam. In this embodiment, the shaping element acts as a placeholder for the core element such that the shapes of the skin components perfectly fit to each other and to the shape of the core component sandwiched in between. The shaping element can be arranged in one of the vacuum bags, particularly in the upper vacuum bag, or between the vacuum bags.

In a preferred embodiment of the method according to the present invention, at least one further shaping element is arranged between the first skin stack and the second skin stack such that a part of the surface of the first skin stack and a part of the surface of the second skin stack adapts to the shape of the at least one further shaping element, wherein the shape of the at least one further shaping element corresponds to the shape of a electrically conductible element of a lightning protection arrangement of the wind turbine. Regarding the final carbon beam, the electrically conductible element can be arranged in contact with the skin components and particular with the core component in the manufactured carbon beam. The further shaping element is particularly arranged at a, particularly tapered, axial end of the core element. Preferably, several further shaping elements can be provided, namely if the final carbon beam comprises several electrically conductible elements being particularly "conductive fingers". The electrically conductible element can connect the core component with a down-conductor cable or with cables located on both sides of the core element, wherein these cables are possibly arranged outside of the skin elements. However, these cables can also be arranged inside the respective skin element. Additionally or alternatively, the conductible element can connect the core component with at least one lightning conductor. The, particularly knob- or rod-like, lightning conductor can protrude from the surface of the wind turbine blade and realize a preferred striking point for lightnings. An example regarding the concrete realization of the electrically conductible element is disclosed in EP 3 511 560 A1, wherein the aspects described therein can be realized in the present invention.

The lightning protection arrangement of the wind turbine can comprise a blade conductor, particularly being the cable(s) and/or the core element, which is electrically connected with the lightning conductor on its one end and with the down-conductor cable leading to an electrical grounding on its other end. The respective electrical connection(s) can be realized by the electrically conductible element(s).

According to a possible embodiment of the invention, for manufacturing a first, particularly outer, skin component, a first skin stack comprising a curable binding agent is arranged on the mold surface such that the shape of the first skin stack adapts to the shape of the mold surface, wherein the binding agent is activated to conserve the shape of the first skin stack, wherein, for manufacturing a second, particularly inner, skin component, a second skin stack comprising a curable binding agent is arranged on a further mold surface of a further core mold or on a placeholder being arranged on the mold surface such that the shape of the second skin stack adapts to the shape of the further mold surface or of the placeholder, wherein the binding agent is activated to conserve the shape of the second skin stack, wherein the shape of the further mold surface or of the placeholder corresponds to the shape of the first skin component and the at least one core component which are arranged in contact with the second skin component in the manufactured carbon beam. In this embodiment, the shape of the second skin stack is not defined directly by the first skin stack itself but by the further mold surface and/or by the place holder. In this embodiment, also vacuum foils which have been described in detail before can be provided to constitute vacuum bags having the respective skin stack inside.

The binding agent can be activated by applying heat to the respective skin stack. The binding agent is preferably a heat-meltable powder binder. The powder binder can be applied to the surfaces of the skin mats before these components are arranged on the mold surface. After the shape-giving process, e.g., after establishing the vacuums and particularly after the vacuum bag has been removed from the core mold together with the respective skin stack, thermal energy or heat is applied to the skin stack and, hence, to the powder binder. Due to the heat, the powder binder is melted or softened up or fluidized and migrates and distributes over the material of the skin mats, particularly between the fibers, and/or to several skin mats. A subsequent cooling of the powder binder causes a curing of the binder material such that the respective skin element is stiffened and that the skin mats are adhered to each other.

In a possible embodiment of the present invention, the at least one skin component, which has been removed from the core mold, is brought to a heating means to activate the binding agent. Alternatively, the at least one skin component can be brought to the heating means together with the core mold to activate the binding agent. After it has been removed from the core mold, the skin component can be arranged in a rack, in particular together with further skin components, wherein the rack can be used to bring the skin component to the heating means. The rack can comprise wheels to facilitate the transport of the skin component(s) to the heating means. The skin component can be arranged in the rack together with the core mold.

The heating means can be an oven, wherein the skin component or the rack, respectively, is arranged within the oven to activate the binding agent. Optionally, the shaping element described above can comprise a further heating means such that heat can be induced into the stack arrangement also from the inside of the respective arrangement.

According to another possible embodiment, the activation of the binding agent can take place while the at least one skin component is still arranged on the core mold. In this embodiment, particularly the core mold and/or the or a shaping element acts as a heating means. Hence, the core mold and/or the shaping element can comprise heating elements adapted to create heat which is transferred to the skin component(s). It is also possible that the heat to activate the binding agent is generated by the oven in which the skin component(s) is or are arranged as well as by the core mold and/or the shaping element.

For joining the at least one core component and the skin components together, the at least one core component and the skin component can be arranged in a carbon beam mold cavity, wherein a resin can be infused into the carbon beam mold cavity, particularly under vacuum conditions, and then cured. The carbon beam mold cavity can be realized by a lower half mold shell, particularly being the core mold, and an upper half mold shell which is located on the lower half mold shell, wherein mold surfaces of the half mold shells realize the mold cavity. The vacuum can be created within the mold cavity to induce or facilitate the inducing process of the resin into the mold cavity.

The present invention furthermore relates to a carbon beam for a wind turbine blade, manufactured by a method according to the foregoing description. All features and advantages of the method according to the present invention can be transferred to the carbon beam according to the present invention and vice versa.

The present invention furthermore relates to a wind turbine blade, comprising at least one carbon beam according to the foregoing paragraph. All features and advantages of the method according to the present invention and of the carbon beam according to the present invention can be transferred to the wind turbine blade according to the present invention and vice versa.

The wind turbine blade according to the present invention can be characterized by at least one blade preform element which is joined together with the at least one carbon beam. A possible method for manufacturing the respective wind turbine blade is described in the not yet published European patent application with the number 22187752.5, wherein the respective scope of disclosure of this patent application is hereby incorporated into the present patent application.

The present invention furthermore relates to a wind turbine, comprising at least one wind turbine blade according to the foregoing paragraphs. All features and advantages of the method according to the present invention, the carbon beam according to the present invention and the wind turbine blade according to the present invention can be transferred to the wind turbine according to the present invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show schematically:
- Fig. 1: a wind turbine according to an embodiment of the invention with three wind turbine blades according to an embodiment of the invention, wherein each of the wind turbine blades comprises a carbon beam according to an embodiment to the invention,
- Fig. 2: a cross-sectional view of one of the wind turbine blades of the wind turbine of fig. 1, wherein the cutting line is indicated by II - II in fig. 1,
- Fig. 3: a cross-sectional view of the carbon beam of the wind turbine blade of fig. 2,
- Fig. 4: an exploded view of the carbon beam of fig. 3, and
- Fig. 5 - 19: schematical depictions of the steps of manufacturing the carbon beam of figures 3 and 4 to illustrate the method according to an embodiment of the invention.

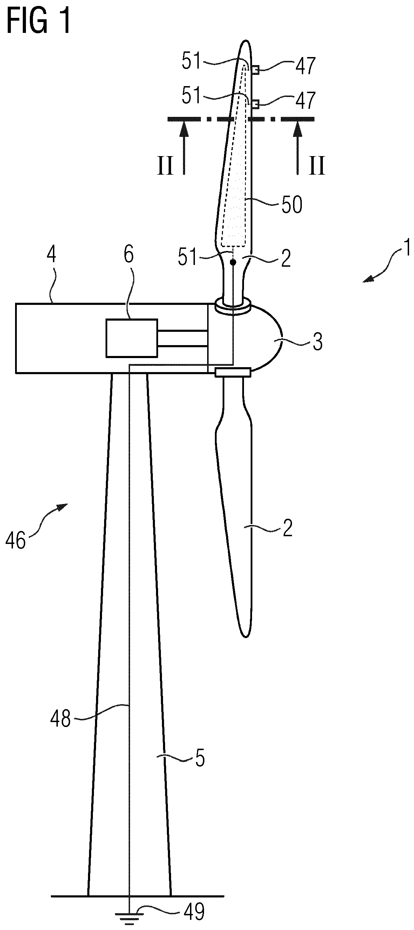

Fig. 1 shows a wind turbine 1 according to an embodiment of the present invention. The wind turbine 1 comprises several, exemplarily three, wind turbine blades 2 according to an embodiment of the present invention. The wind turbine blades 2 are attached to a hub 3 of the wind turbine 1. The hub 3 is mounted on the front side of a nacelle 4 which is supported by a tower 5 and which houses a generator 6 for generating electrical energy from the wind-induced rotation of the wind turbine blades 2 and the hub 3. The wind turbine 1 furthermore comprises a lightning protection arrangement 46, wherein details regarding this aspect will be described later.

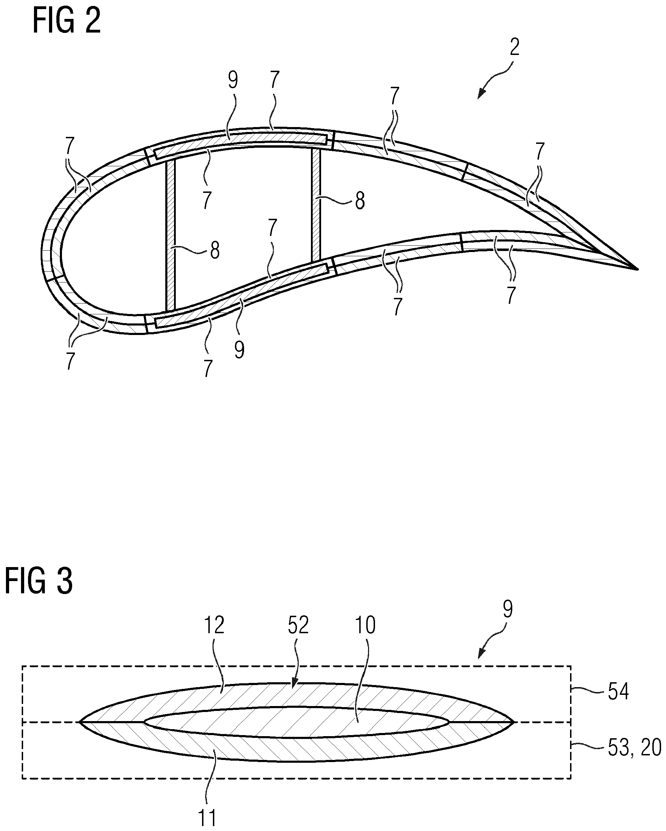

Fig. 2 shows a cross-sectional view of one of the wind turbine blades 2, wherein the respective cutting line is indicated by II - II in fig. 1. The wind turbine blade 2 comprises several blade preform elements 7 which realize an outer and an inner skin of the wind turbine blade 2. The wind turbine blade 2 comprises several sections, wherein in each section two blade preform elements 7 are consolidated in a laminated manner. At the sections of the wind turbine blade 2 where shear webs 8 are arranged, a carbon beam 9 is arranged in a sandwiched position between two stacked blade preform elements 7.

Next, details regarding the structure of the carbon beam 9 are described with the help of fig. 3. This figure shows a cross-sectional view through the carbon beam 9. Additionally, fig. 3 shows half mold shells 53, 54 indicated by dashed lines which are provided for the respective manufacturing process and which will be described later. The carbon beam 9 comprises a core component 10 which is arranged between a first skin component 11 and a second skin component 12. The sandwich-structure of the carbon beam 9 shown in fig. 3 is only present in its lateral ends, particular in its root- and tip section. In the middle section between the root- and tip section, the carbon beam 9 consists only of the core component 10. The carbon beam 9 realizes a great part of the required mechanical strength of the wind turbine blade 2.

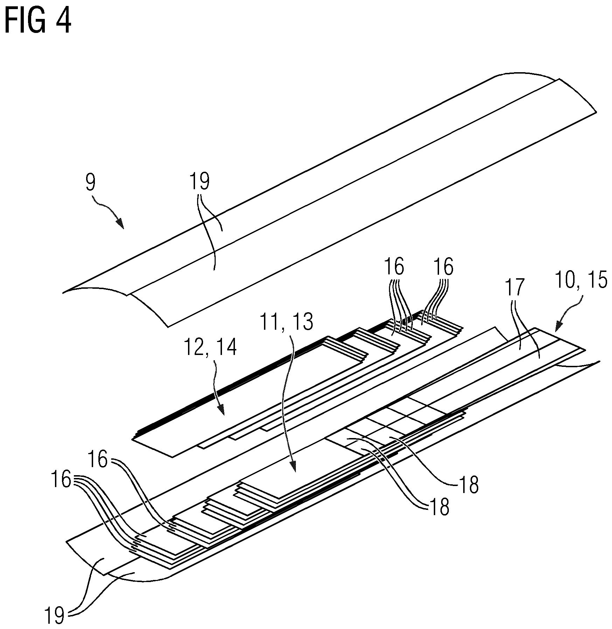

Next, it is referred to fig. 4 which shows an exploded view of the carbon beam 9. The first skin component 11 consists of a first stack 13 and the second skin component 12 consists of a second stack 14. Each of the skin stacks 13, 14 comprises several skin mats 16 comprising glass fibers such that the skin mats 16 can be denominated as glass fiber mats, wherein the skin mats 16 are stacked upon each other.

The core component 10 consists of a core arrangement 15, exemplarily a core stack. The core arrangement 15 comprises several core mats which are not shown in the figures and which can comprise carbon fibers or a hybrid material with carbon fibers and glass fibers. The core arrangement 15 comprises several carbon planks 17 and carbon wedges 18 at its lateral ends. The carbon planks 17 and the carbon wedges 18 are pultruded carbon components. Outer cover layers 19 which are only shown in fig. 4 realize an outer skin of the carbon beam 9.

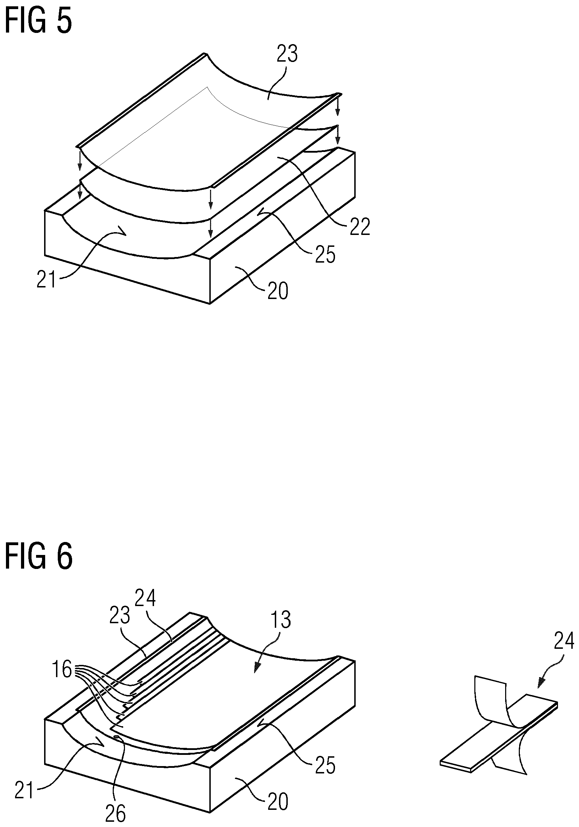

Next, a method according to an embodiment of the present invention to manufacture the carbon beam 9 will be described with the help of figures 5 to 19. Referring to fig. 5, a core mold 20 having a concave mold surface 21 is provided. The mold surface 21 is cleaned and an air transportation layer 22, i.e., a "breathable" sheet, is laid on the mold surface 21. Next, a lower first vacuum foil 23 is arranged on the air transportation layer 22. The air transportation layer 22 consists of an open, porous material to allow air to pass through, i.e., to ensure that a vacuum can be created between the mold surface 21 and the lower first vacuum foil 23 in a later manufacturing step. Particularly, the air transportation layer 22 avoids the creation localized air-islands between the mold surface 21 and the lower first vacuum foil 23 when the vacuum is created. A valve 26 (see fig. 6) being a socket and realizing an air outlet is arranged at a lateral edge of the first lower vacuum foil 23.

Next, referring to fig. 6, the first lower vacuum foil 23 is sealed, e.g., by a butyl band 24 or tape which is placed at the lateral edge of the first vacuum foil 23, i.e., on the respective positions of the mold surface 21 and of a mold flange 25. Fig. 6 additionally shows an enlarged view of the butyl band 24 which acts as a double-sided adhesive tape. Next, the skin mats 16 realizing the first skin stack 13 is arranged on the first lower vacuum foil 23.

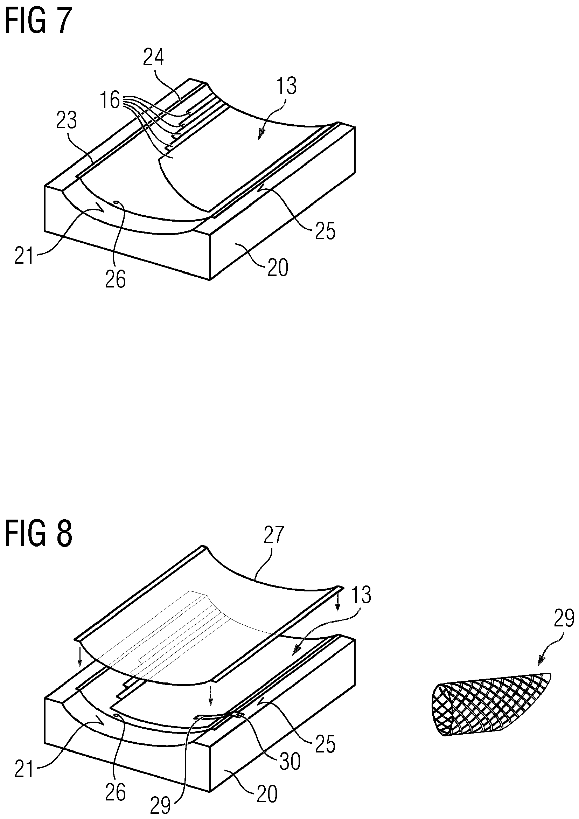

Fig. 7 shows the same arrangement as fig. 6, however, the skin mats 16 shown in fig. 7 are, in contrast to the skin mats 16 shown in fig. 6, tapered, i.e., cut off with an angle, at the lateral ends of the fist skin stack 13. This causes the positive effect that wrinkles of the skin mats 16 are avoided which may occur if the cut is a straight transverse edge, like it is the case in fig. 6.

Next, referring to fig. 8, a first upper vacuum foil 27 is arranged on the first skin stack 13. The first upper vacuum foil 27 is also sealed to the mold surface 21 and to the mold flange 25 by the butyl band 24. Hence, the first vacuum foils 23, 27 realize a first vacuum bag 28 (not depicted in fig. 8) having the first skin stack 13 inside.

Between the first vacuum foils 23, 27, an airpath element 29 is arranged. The "breathable" airpath element 29 consists of a porous material to allow air to pass through. As can be seen in the enlarged section of fig. 8, the airpath element 29 is realized as a porous tube. A section of the airpath element 29 protrudes from the first vacuum bag 28 laterally. The airpath element 29 realizes a valve or outlet 30 which allows air to be removed from the interior of the first vacuum bag 28.

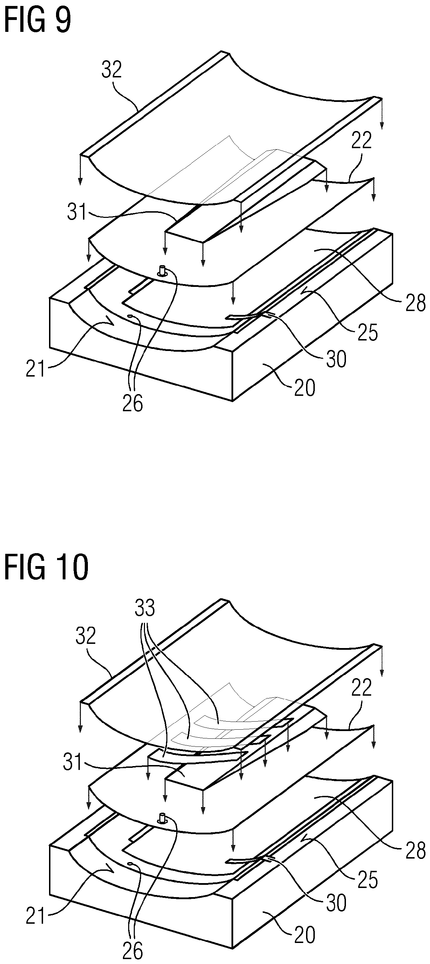

Next, referring to fig. 9, another air transportation layer 22 is arranged on the first vacuum bag 28. On top of the resulting arrangement, a shaping element 31 is positioned. The shape of the shaping element 31 corresponds to the shape of the core component 10. The shaping element consists of a plastic material or of wood. Next, a second lower vacuum foil 32 is arranged on the resulting arrangement. The second lower vacuum foil 32 is sealed to the mold surface 21 and to the mold flange 25 by the butyl band 24 such that the area between the first upper vacuum foil 27 and the second lower vacuum foil 32 is airtightly sealed and air can be removed from this area later. Another valve 26 is arranged at a lateral edge of the second lower vacuum foil 32.

Fig. 10 shows another possible option regarding the step which has been explained with the help of fig. 9. According to this option, further shaping elements 33 are arranged between the first upper vacuum foil 27 and the second lower vacuum foil 32 together with the shaping element 31. The shape of the further shaping elements 33 correspond to the shape of electrically conductible elements 51 being particularly "conductive fingers". The further shaping elements 33 are arranged at the tapered axial ends of the core element 10.

Regarding the electrically conductible elements 51, the wind turbine 1 exemplarily comprises the lightning protection arrangement 46 (see fig. 1) with, particularly knob- or rod-like, lightning conductors 47 which protrude from the surface of the wind turbine blade 2 and which realize preferred striking points for lightnings. The lightning protection arrangement 46 furthermore comprises a down-conductor cable 48 leading to an electrical grounding 49. The electric current caused by a lightning striking into one of the lightning conductors 47 is transferred via a blade conductor 50 being the core component 10 and/or separate cables, which can extend along both lateral sides of the core component 10, to the down-conductor cable 48. The blade conductor 50 and the down-conductor cable 48 as well as the blade conductor 50 and the lightning conductors 47 are electrically connected by the electrically conductible elements 51. Additionally or alternatively, the electrically conductible elements 51 can electrically connect the core component 10 with the cable(s) which can be arranged outside or inside the skin elements 11.

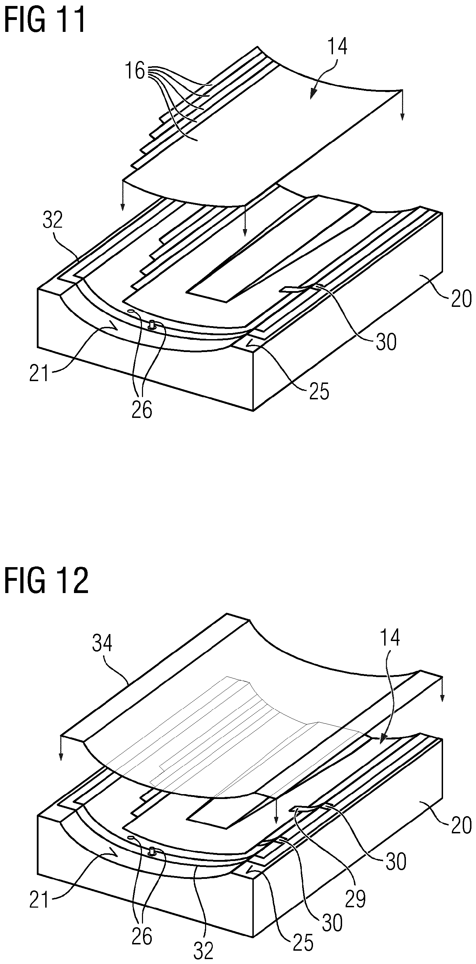

Next, referring to fig. 11, the skin mats 16 of the second skin stack 12 are arranged on the second lower vacuum foil 32.

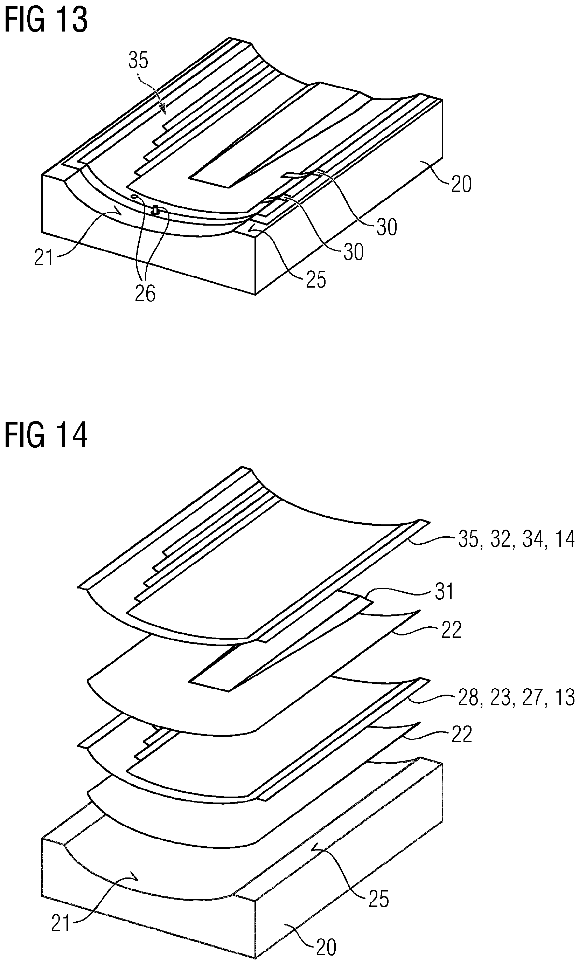

Next, referring to fig. 12, a second upper vacuum foil 34 is arranged on the second lower vacuum foil 32 or the second skin stack 12, respectively, and sealed to the mold surface 21 and to the mold flange 25 by the butyl band 29. Between the second vacuum foils 32, 34, another airpath element 20 constituting another outlet 30 is arranged. The second vacuum foils 32, 34 realize a second vacuum bag 35 having the second skin stack 12 inside. The resulting arrangement is shown in fig. 13. Fig. 14 shows an exploded view of this arrangement.

Next, several vacuums are created using a vacuum pump which is not shown in the figures. For this, the vacuum pump is connected with the valves 26 and outlets 30 such that a vacuum is created between the mold surface 21 and the first lower vacuum foil 23, within the first vacuum bag 28, between the first upper vacuum foil 27 and the second lower vacuum foil 32 and within the second vacuum bag 35. Hence, the shape of the skin stacks 13, 14 adapt to the shape of the mold surface 21, to the shape of each other, to the shape of the shaping element 31 and to the shape of the further shaping elements 33. Next, the vacuum bags 28, 35 together with the skin stacks 13, 14 are brought to a heating means 44.

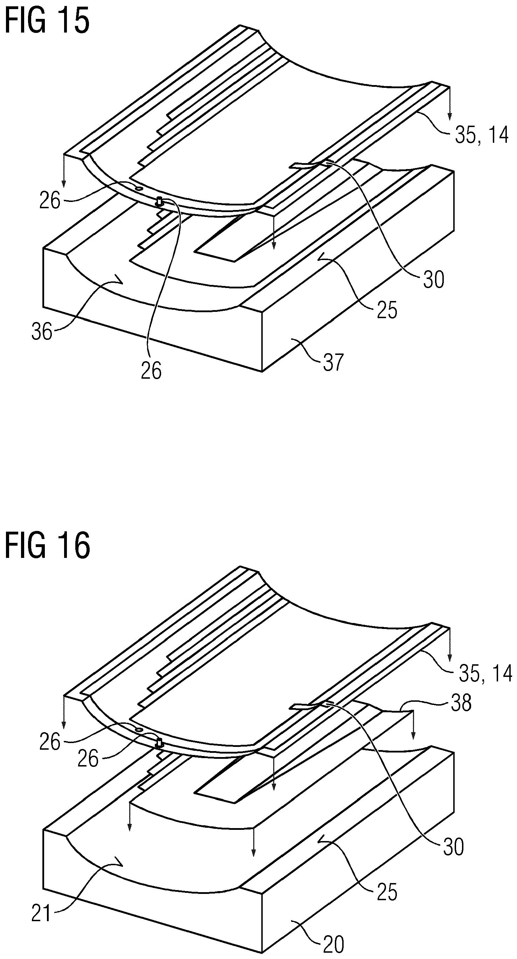

However, before this will be explained in detail, an alternative embodiment of the respective method which can also be executed to achieve the respective vacuum bags 28, 35 is explained. Regarding this embodiment, firstly, the steps which have been explained with the help of figures 5 to 8 are executed to achieve the first vacuum bag 28 having the first skin stack 13 inside. Referring to fig. 15, the second skin stack 14 and the respective second vacuum bag 35 is arranged on a further mold surface 36 of a further core mold 37. The shape of the second skin stack 14 adapts to the shape of the further mold surface 36, wherein the shape of the further mold surface 36 corresponds to the shape of the first skin component 11 and the core component 10 which are in contact with the second skin component 12 in the final carbon beam 9.

Next, referring to fig. 16, an alternative regarding the steps which have been described with the help of fig. 15 is described. In this embodiment, a place holder 38 is arranged on the mold surface 21 of the core mold 20, wherein the second skin stack 14 and the second vacuum bag 35, respectively, is arranged on the place holder 38. The shape of the second skin stack 14 adapts to the shape of the place holder 38, wherein the shape of the place holder 38 corresponds to the shape of the first skin component 11 and the core component 10 which are arranged in contact with the second skin component 12 in the final carbon beam 9.

Next, another possible embodiment is described which differs from the embodiments described above with respect to the vacuum foils 23, 27, 32, 34. In this embodiment, the first skin stack 13 is arranged between the mold surface 21 and the first upper vacuum foil 27, i.e., the first lower vacuum foil 23 is omitted. In this embodiment, a vacuum is created between the mold surface 21 and the first upper vacuum foil 27. Since, as will be described later, a binding agent is activatable by applying heat, the first skin stack 13 and particularly the second skin stack 14 can be removed from the mold surface 21 not before the heat has been applied to activate the binding agent. Instead of or additionally to omitting the first lower vacuum foil 23, the second lower vacuum foil 32 can be omitted analogously.

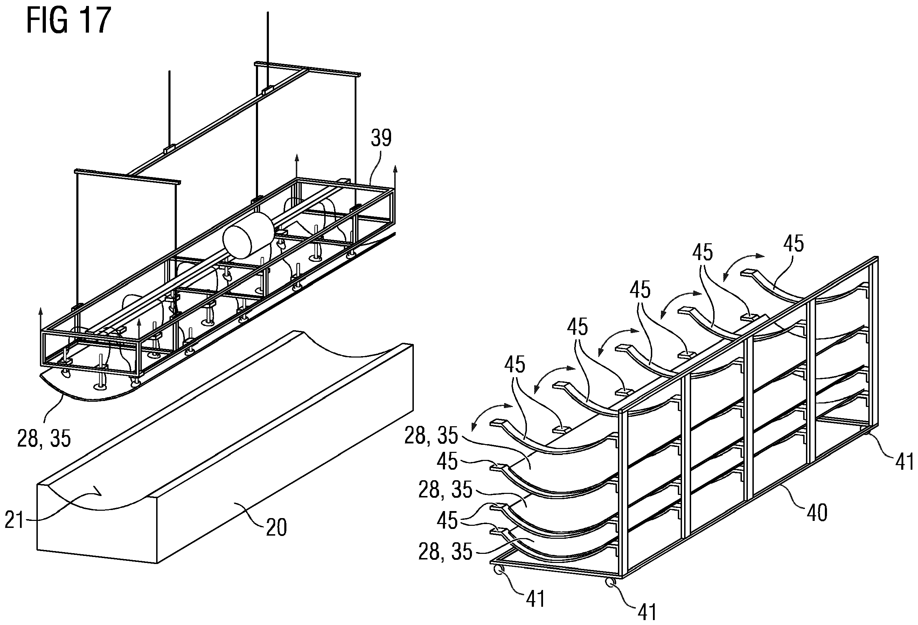

Next, referring to fig. 17 and the arrangement shown in fig. 13, the vacuum bags 28, 35 are removed from the core mold 20 by a yoke 39 with the help of a crane, which is not shown in the figures. The vacuum bags 28, 35 are arranged in a rack 40 having wheels 41. Since holding arms 45 of the rack 40 can be pivoted horizontally, the vacuum bags 28, 35 can be lowered from above to be stored in the rack 40.

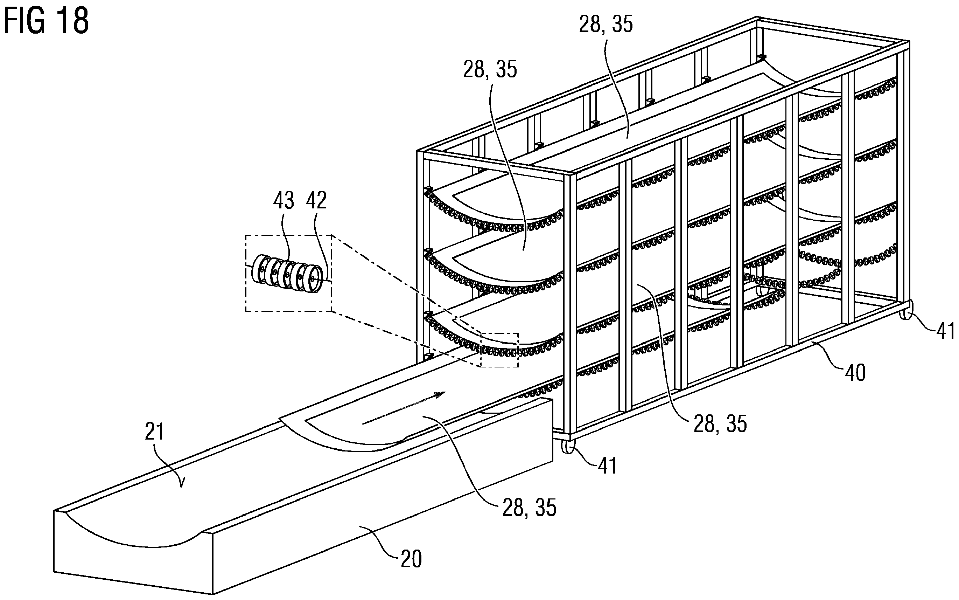

Fig. 18 shows another possibility for bringing the vacuum bags 28, 35 into the rack 40, wherein the rack 40 of fig. 18 has, instead of holding arms 45, receiving bands 42 with rollers 43 each (see enlarged part of fig. 18) such that the vacuum bags 28, 35 can be pushed along their longitudinal directions from the core mold 20 into the rack 40 via the front face of the rack 40.

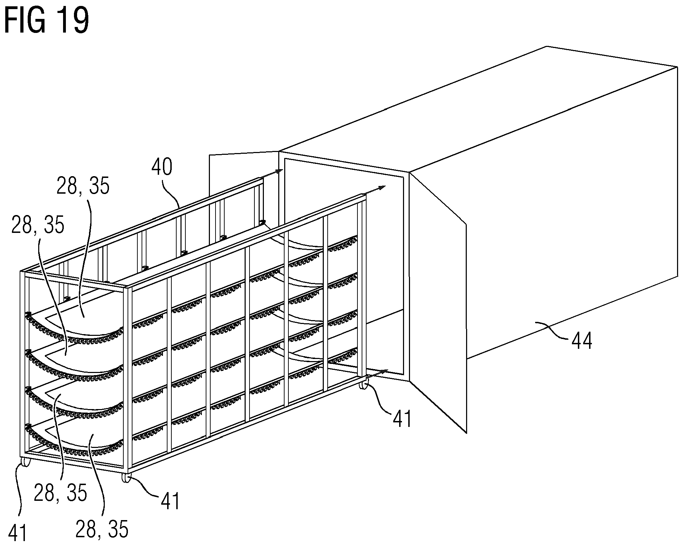

Next, as can be seen in fig. 19, the rack 40 together with the skin stacks 13, 14 is arranged or moved into the heating means 44 being an oven. Within the heating means 44, the skin stacks 13, 14 are heated to activate a binding agent of the skin mats 16. The binding agent is a heat-meltable powder binder. The activated binding agent stiffens the skin stacks 13, 14 and causes the skin mats 16 to be adhered together. Hence, the skin stacks 13, 14 having the activated binding agent realize the respective skin components 11, 12.

After the binding agent has been cured, the rack 40 is removed from the heating means 44 and the vacuum foils 23, 27, 32, 34 are removed from the skin components 11, 12.

The activation of the binding agent can also take place without the oven. In this embodiment, the skin components 11, 12 are arranged on the core mold 20 during the activation of the binding agent, wherein the core mold 20 and/or the shaping element 31 acts as the heating means 44. For this, the core mold 20 and the shaping element 31 comprises heating elements (not shown in the figures) adapted to create heat which is transferred to the skin components 11, 12. It is also possible that the heat to activate the binding agent is generated by several heating means 44 being the oven in which the skin components 11, 12 are arranged and/or by the core mold 20 and/or by the shaping element 31.

Next, referring to fig. 3 again, the skin components 11, 12 and the, particularly prefabricated, core component 10 are arranged in a carbon beam mold cavity 52. The carbon beam mold cavity 52 is realized by a lower half mold shell 53 and an upper half mold shell 54 which is positioned on and sealed to the lower half mold 53 shell such that the respective mold surfaces of the half mold shells 53, 54 realize the carbon beam mold cavity 52. The core mold 20 can be used as the lower half mold shell 53. A vacuum can be created within the carbon beam mold cavity 52 to induce or facilitate the inducing process of the resin into the carbon beam mold cavity 52. The resin is cured to join the components 10, 11, 12 to each other and to build the final carbon beam 9. Instead of using the skin components 11, 12 which have been manufactured as described above, skin components 11, 12 which have been prefabricated at another place or location can be used.

Subsequently, the resulting carbon beam 9 and the blade preform elements 7, which could have been produced as described in the not yet published European patent application with the number 22187752.5, are joined together to manufacture the final wind turbine blade 2.

Although the present invention has been described in detail with reference to the preferred embodiment, the present invention is not limited by the disclosed examples from which the skilled person is able to derive other variations without departing from the scope of the invention.

## Claims

1. Method for manufacturing a carbon beam (9) adapted to be a part of a wind turbine blade (2) to increase or to cause the mechanical strength of the wind turbine blade (2), wherein the final carbon beam (9) comprises at least one core component (10) being made of or comprising at least one carbon plank (17) and/or a core arrangement (15) of core mats comprising carbon fibers, wherein at least a part of the core component (10) is arranged between skin components (11, 12) being made of or comprising a skin stack (13, 14) of skin mats (16) each, wherein the at least one core component (10) and the skin components (11, 12) are provided and then joined together to build the final carbon beam (9), wherein a prefabricated core component (10) is used, and wherein either also prefabricated skin components (11, 12) are used or wherein the skin components (11, 12) are produced by arranging the skin stack (13, 14) in a predetermined shape and fixing the skin mats (16) with an adhesive.

2. Method according to claim 1, **characterized in that**, for producing at least one of the skin components (11, 12), the skin stack (13, 14) comprising a curable binding agent being the adhesive is arranged on a mold surface (21) of a core mold (20) such that the shape of the skin stack (13, 14) adapts to the shape of the mold surface (21), wherein the binding agent is activated to conserve the shape of the skin stack (13, 14).

3. Method according to claim 2, **characterized in that** the skin stack (13, 14) is arranged
- between a lower vacuum foil (23, 32) and an upper vacuum foil (27, 34), wherein a vacuum is created between the mold surface (21) and the lower vacuum foil (23, 32) and between the lower vacuum foil (23, 32) and the upper vacuum foil (27, 34), or
- between the mold surface (21) and an upper vacuum foil (27, 34), wherein a vacuum is created between the mold surface (21) and the upper vacuum foil (27, 34).

4. Method according to claim 2 or 3, **characterized in that**, for manufacturing a first skin component (11), a first, particularly outer, skin stack (13) comprising the curable binding agent is arranged on the mold surface (21) such that the shape of the first skin stack (13) adapts to the shape of the mold surface (21), wherein the binding agent is activated to conserve the shape of the first skin stack (13), wherein, for manufacturing a second, particularly inner, skin component (12), a second skin stack (14) comprising a curable binding agent is arranged on the first skin stack (13) such that the shape of the second skin stack (14) adapts to the shape of the first skin stack (13), wherein the binding agent is activated to conserve the shape of the second skin stack (14).

5. Method according to claims 3 and 4, **characterized in that** the first skin stack (13) is arranged between a first lower vacuum foil (23) and a first upper vacuum foil (27), wherein a vacuum is created between the mold surface (21) and the first lower vacuum foil (23) and between the first lower vacuum foil (23) and the first upper vacuum foil (27), wherein the second skin stack (14) is arranged between a second lower vacuum foil (32) and a second upper vacuum foil (34), wherein a vacuum is created between the first upper vacuum foil (27) and the second lower vacuum foil (32) and between the second lower vacuum foil (32) and the second upper vacuum foil (34) .

6. Method according to claim 4 or 5, **characterized in that** at least one shaping element (31) is arranged between the first skin stack (13) and the second skin stack (14) such that a part of the surface of the first skin stack (13) and a part of the surface of the second skin stack (14) adapts to the shape of the at least one shaping element (31), wherein the shape of the at least one shaping element (31) corresponds to the shape of the at least one core component (10) which is arranged in contact with the skin components (11, 12) in the manufactured carbon beam (9).

7. Method according to claim 6, **characterized in that** at least one further shaping element (33) is arranged between the first skin stack (13) and the second skin stack (14) such that a part of the surface of the first skin stack (13) and a part of the surface of the second skin stack (14) adapts to the shape of the at least one further shaping element (33), wherein the shape of the at least one further shaping element (33) corresponds to the shape of a electrically conductible element (51) of a lightning protection arrangement (46) of the wind turbine (1).

8. Method according to claim 2 or 3, **characterized in that**, for manufacturing a first, particularly outer, skin component (11), a first skin stack (13) comprising a curable binding agent is arranged on the mold surface (21) such that the shape of the first skin stack (13) adapts to the shape of the mold surface (21), wherein the binding agent is activated to conserve the shape of the first skin stack (13), wherein, for manufacturing a second, particularly inner, skin component (12), a second skin stack (14) comprising a curable binding agent is arranged on a further mold surface (36) of a further core mold (37) or on a placeholder (38) being arranged on the mold surface (21) such that the shape of the second skin stack (14) adapts to the shape of the further mold surface (36) or of the placeholder (38), wherein the binding agent is activated to conserve the shape of the second skin stack (14), wherein the shape of the further mold surface (36) or of the placeholder (38) corresponds to the shape of the first skin component (13) and the at least one core component (10) which are arranged in contact with the second skin component (12) in the manufactured carbon beam (9).

9. Method according to one of the claims 2 to 8, **characterized in that** the binding agent, being particularly a heat-meltable powder binder, is activated by applying heat to the respective skin stack.

10. Method according to claim 9, **characterized in that**
- the at least one skin component (11, 12), which has been removed from the core mold (20), or the at least one skin component (11, 12) together with the core mold (20) is or are brought to a heating means (44), particularly arranged in an oven, to activate the binding agent, or
- the activation of the binding agent takes place while the at least one skin component (11, 12) is still arranged on the core mold (20), wherein particularly the core mold (20) and/or the or a shaping element (31) acts as a heating means (44).

11. Method according to one of the preceding claims, **characterized in that**, for joining the at least one core component (10) and the skin components (11, 12) together, the at least one core component (10) and the skin components (11, 12) are arranged in a carbon beam mold cavity (52), wherein a resin is infused into the carbon beam mold cavity (52), particularly under vacuum conditions, and then cured.

12. Carbon beam for a wind turbine blade (2), manufactured by a method according to one of the preceding claims.

13. Wind turbine blade, comprising at least one carbon beam (9) according to claim 12.

14. Wind turbine blade according to claim 13, **characterized by** at least one blade preform element (7) which is joined together with the at least one carbon beam (9).

15. Wind turbine, comprising at least one wind turbine blade (2) according to claim 13 or 14.
